# FASCICULE DE BREVET EUROPEEN

(11) **EP 3 853 118 B1**
(45) Date de publication et mention de la délivrance du brevet: **24.04.2024**
(21) Numéro de dépôt: 19765697.8
(22) Date de dépôt: 05.09.2019
(51) Int. Cl.: B63B 21/50, B63B 35/44, B63B 39/02, F03D 13/25

(54) **EOLIENNE FLOTTANTE À POSITION EN LACET PILOTABLE**
SCHWIMMENDE WINDKRAFTANLAGE MIT STEUERBARER GIERPOSITION
FLOATING WIND TURBINE WITH CONTROLLABLE YAW POSITION

(30) Priorité: 20.09.2018 FR 1858540
(43) Date de publication de la demande: 28.07.2021
(73) Titulaire: EOLINK, 29280 Plouzané (FR)
(72) Inventeur: GUYOT, Marc, 29280 Plouzané (FR)
(74) Mandataire: Ipside
(86) Numéro de dépôt international: PCT/EP2019/073752
(87) Numéro de publication internationale: WO 2020/057997

(56) Documents cités:
- EP-A1- 2 986 848
- WO-A1-2009/067023
- WO-A1-2010/093253
- FR-A1- 2 967 470
- FR-A1- 3 022 880

## Description

Le domaine de l'invention est celui de la conception et de la fabrication de moyens de production d'énergie en milieu marin.

Plus précisément, l'invention concerne un ensemble de production d'énergie en milieu marin qui comprend une éolienne du type auto-orientable, c'est-à-dire apte à se déplacer en fonction de la direction du vent.

Pour permettre la production d'énergie renouvelable les éoliennes, qui utilisent la force du vent, sont couramment utilisées.

Selon une conception classique, les éoliennes sont constituées d'un mât sur lequel est monté une turbine pourvue d'une hélice et une unité de transformation du mouvement de l'hélice en un courant électrique.

Les éoliennes sont généralement implantées dans les champs cultivés ou dans des espaces dédiées, en forme de fermes éoliennes.

Toutefois, pour les riverains habitant à proximité des éoliennes, ces dernières présentent de nombreux inconvénients.

Tout d'abord, les éoliennes génèrent un bruit lors de leur fonctionnement. Ce bruit est notamment dérangeant lorsque les éoliennes fonctionnent la nuit pendant que les riverains souhaitent dormir.

Par ailleurs, bien que des efforts aient été déployés pour les rendre esthétiques, les éoliennes forment une masse importante dénaturant les paysages.

En outre, l'espace nécessaire pour l'implantation d'une éolienne terrestre est important. Dès lors il peut être impossible d'implanter une éolienne terrestre à certaines localisations ou une limite du nombre d'éoliennes terrestres à implanter peut être imposée au détriment de la capacité de production électrique.

Enfin, les conditions de vent peuvent ne pas être optimales sur terre. En revanche, il a été démontré qu'en mer, les vents sont plus forts et plus réguliers, ce qui est bénéfique pour la production d'électricité.

Pour limiter les nuisances aux riverains et améliorer les capacités de production électrique, des éoliennes destinées à être implantées en mer ont été conçues.

Il existe plusieurs types d'éoliennes marines.

Le premier type concerne les éoliennes marines dites classiques, c'est-à-dire les éoliennes telles que celles qui sont implantées sur terre, mais qui sont légèrement modifiées pour pouvoir être implantées en mer.

La direction du vent pouvant changer, ce premier type d'éolienne marine comprend une turbine montée mobile sur le mât de sorte à s'adapter à la direction du vent.

Or, la turbine constitue un poids important en haut de l'éolienne, ce qui, par conséquent, engendre un bras de levier considérable et provoque d'importantes contraintes de basculement. Il est donc nécessaire de prévoir une structure d'ancrage de l'éolienne devant résister aux contraintes liées au vent et au poids de la turbine.

A ce jour, la majorité des éoliennes marines, dites « offshore », repose sur le fond marin, à l'exception de quelques prototypes d'éoliennes flottantes selon le deuxième type et le troisième type, décrits ci-après. Le mât des éoliennes marines repose donc le plus souvent sur un tube métallique profondément enfoncé dans le sous-sol sous-marin et plus rarement sur une structure métallique en treillis appelée « jacket ».

Les éoliennes marine de ce premier type sont alors généralement très lourdes et leur installation, y inclus la structure d'ancrage, peut être longue et fastidieuse.

Les éoliennes marines flottantes permettent d'exploiter d'immenses étendues marines. Au contraire des éoliennes marines fixes précitées, les éoliennes flottantes peuvent être installées au-delà de 50 m de profondeur, et l'assemblage entre la turbine et les fondations peut avantageusement être réalisé à terre et non en mer où les conditions sont plus difficiles.

Les éoliennes flottantes sont maintenues sur leur site de production à l'aide de systèmes d'ancrage.

Ces systèmes d'ancrage de l'éolienne, doivent résister aux conditions courantes et aux conditions extrêmes. Elles sont généralement composées d'ancres (ancre à traînée, ancre à succion, plaques ensouillées, ou encore poids mort), de lignes d'ancrages (en chaîne, en câble métallique, en matériaux synthétiques tels que polyester, polyéthylène haute densité, voire polyamide).

Un deuxième type concerne les éoliennes similaires au premier type mais portées par une structure flottante reliée au fond marin. En production, les éoliennes du deuxième type sont soumises aux courants et à la houle qui peuvent induire un angle de lacet à l'éolienne, c'est-à-dire une rotation de l'éolienne flottante par rapport à un axe vertical.

Pour lutter contre cet angle de lacet, les éoliennes flottantes du deuxième type comprennent un système de réglage électrique en lacet. Par exemple, des moteurs électriques ou un système de dérive sous le vent permettent de faire tourner la turbine par rapport au mât afin de positionner l'axe de rotation de l'hélice de la turbine dans l'axe du vent.

Afin d'améliorer la résistance structurelle des éoliennes flottantes, le document de brevet publié sous le numéro EP2 986 848 décrit un troisième type d'éolienne flottante qui comprend une structure flottante qui porte une turbine éolienne à axe horizontale à l'aide de plusieurs bras. La nacelle de la turbine est fixe par rapport à la structure flottante de l'éolienne flottante si bien qu'elle ne peut plus s'orienter face au vent indépendamment de la structure flottante afin compenser l'angle de lacet dû aux efforts de la mer. En résumé, c'est l'ensemble de l'éolienne flottante qui s'oriente face au vent, en tournant autour d'un moyen d'ancrage tel qu'une bouée ou un touret.

Ce troisième type concerne donc des éoliennes marines dites du type auto-orientables.

Ces éoliennes sont généralement plus petites et plus légères que celles du premier type et du deuxième type

L'invention a notamment pour objectif de palier les inconvénients de l'art antérieur.

Plus précisément, l'invention a pour objectif de proposer un ensemble de production d'énergie en milieu marin, permettant de contrer les efforts de la mer et du vent pour stabiliser l'éolienne afin d'assurer une bonne orientation de la turbine et garantir un rendement de production élevé de l'éolienne.

L'invention a également pour objectif de fournir un tel ensemble dont la stabilité de l'éolienne peut être obtenue de manière rapide.

L'invention a en outre pour objectif de fournir un tel ensemble qui soit simple de fonctionnement et autonome.

Ces objectifs, ainsi que d'autres qui apparaîtront par la suite, sont atteints grâce à l'invention qui a pour objet un ensemble de production d'énergie en milieu marin comprenant :
- des moyens d'ancrage destinés à être solidarisé à un fond marin ;
- une éolienne flottante comprenant une turbine présentant un axe de rotation fixe d'une hélice par rapport à une structure flottante de l'éolienne flottante, l'éolienne flottante étant reliée aux moyens d'ancrage et étant destinée à pivoter autour de ceux-ci de sorte que l'axe de rotation de la turbine soit sensiblement parallèle à une direction du vent,

- des moyens de détermination de la direction du vent ;
caractérisé en ce qu'il comprend :
- des moyens de détection d'une orientation de l'éolienne flottante par rapport à la direction du vent ;
- des moyens de détection d'une inclinaison de l'éolienne flottante autour d'un axe parallèle à l'axe de rotation de l'hélice de la turbine ;
- des moyens de pilotage de l'inclinaison de l'éolienne flottante ;
- une unité de calcul, destinée à recevoir des informations provenant des moyens de détermination de la direction du vent, des moyens de détection de l'inclinaison de l'éolienne flottante et des moyens de détection de l'orientation de l'éolienne flottante par rapport à la direction du vent, pour transmettre une consigne aux moyens de pilotage de l'inclinaison de l'éolienne flottante et modifier l'orientation de l'éolienne flottante par rapport à la direction du vent.

Grâce au pilotage de l'inclinaison de l'éolienne flottante, il est possible de garantir un meilleur rendement de l'éolienne flottante en termes de production électrique.

En outre, la fatigue, et donc la casse ou l'endommagement prématuré de l'éolienne flottante sont atténués voire supprimés.

Par ailleurs, la modification de l'inclinaison de l'éolienne flottante est réalisée par une modification de l'angle de roulis de cette dernière, c'est-à-dire une modification de l'inclinaison de l'éolienne flottante selon l'axe fixe de rotation de l'hélice. Par une relation de cause à effet, la modification de l'angle de roulis de l'éolienne flottante permet d'agir et de modifier son angle de lacet, c'est-à-dire son orientation selon un axe sensiblement perpendiculaire à la surface de la mer et à l'axe de rotation de l'hélice de la turbine.

En effet, la position du centre de poussée vélique (proche du centre de l'hélice de la turbine) défini par le balayage des pales, est modifiée lorsque l'angle de roulis est modifié. Ceci a pour effet de modifier la position de l'éolienne et en particulier son angle de lacet par rapport à la direction du vent. Dès lors la production d'énergie électrique est améliorée alors que les conditions de mer seraient défavorables pour une exploitation de l'éolienne.

En d'autres termes, pour modifier l'angle de lacet, on n'agit pas directement sur celui-ci, par exemple en jouant sur la tension des amarres qui relient l'éolienne flottante aux moyens d'ancrage, mais sur d'autres paramètres plus faciles à modifier et moins contraignants pour la structure de l'éolienne flottante.

Selon un premier mode de réalisation avantageux, les moyens de pilotage de l'inclinaison comprennent un système de ballast ayant :
- un premier réservoir et un deuxième réservoir solidaires chacun d'une structure de l'éolienne flottante et disposés chacun de part et d'autre de l'axe de rotation de la turbine, et étant aptes à agir sur l'inclinaison de l'éolienne flottante ;
- des moyens de pompage configurés pour permettre un transvasement d'un poids sous forme liquide ou semi liquide du premier réservoir vers le deuxième réservoir ou inversement.

L'utilisation de réservoirs pour former des ballasts permet une rapidité d'exécution dans la modification de l'orientation de m'éolienne flottante.

En outre, le pompage ou le rejet d'eau directement dans la mer et/ou d'un ballast à l'autre, assure une rapidité de la modification de l'orientation de l'éolienne flottante pour accroître encore son rendement.

Selon un deuxième mode de réalisation avantageux, les moyens de pilotage de l'inclinaison comprennent :
- une masse montée mobile sur une structure de l'éolienne flottante ;
- des moyens de guidage en déplacement de la masse, définissant un chemin de guidage s'étendant de part et d'autre de l'axe de rotation de la turbine ;
- des moyens moteurs pour permettre le déplacement de la masse sur les moyens de guidage.

De tels moyens de pilotage sont avantageusement rapides à mettre en oeuvre puisqu'un simple déplacement de la masse sur un côté ou l'autre de l'éolienne flottante assure son changement d'inclinaison. En outre, en utilisant des moyens de guidage prédéterminés, il est possible de modifier l'inclinaison de l'éolienne flottante avec une grande finesse.

Selon un troisième mode de réalisation, les moyens de pilotage de l'inclinaison comprennent des moyens d'ajustement du couple de la turbine pour faire varier le couple de la turbine en fonction d'une consigne provenant de l'unité de calcul.

En contrôlant le couple de la turbine, il est possible de modifier l'inclinaison en roulis de l'éolienne flottante en fonction des efforts dus au vent. En d'autres termes, avec un vent fort et donc une inclinaison importante, l'ajustement du couple de la turbine (diminution du couple) pour limiter les effets du vent sur l'inclinaison de l'éolienne flottante permet de conserver une puissance de production électrique égale (on parle également d'iso puissance).

Avantageusement, les moyens de détermination de la direction du vent comprennent une girouette.

Une girouette est à la fois simple de mise en oeuvre et d'installation et se révèle relativement précise pour permettre la bonne orientation de l'éolienne flottante.

Selon une première variante de réalisation, la girouette est solidaire de l'éolienne flottante.

Selon une deuxième variante de réalisation, la girouette est solidaire des moyens d'ancrage.

Il est ainsi possible de positionner la girouette soit sur les moyens d'ancrage, soit sur l'éolienne flottante sans que cela n'influe sur la qualité d'orientation de l'éolienne flottante. Ainsi, peu importe son emplacement, la girouette peut fournir des informations fiables permettant de correctement orienter l'éolienne flottante en fonction de la direction du vent.

Avantageusement, les moyens de détection de l'inclinaison de l'éolienne flottante comprennent une centrale inertielle solidaire de l'éolienne flottante.

Une centrale inertielle permet de connaître l'inclinaison de l'éolienne flottante selon plusieurs axes. Cela permet notamment un réglage précis de l'orientation de l'éolienne flottante en fonction de la direction du vent et donc un rendement de production important.

L'invention concerne également un procédé de modification de l'orientation d'une éolienne flottante mise en oeuvre par un ensemble de production d'énergie en milieu marin selon l'une quelconque des revendications précédentes, caractérisé en ce qu'il comprend les étapes consistant à :
- déterminer la direction du vent ;
- détecter l'orientation de l'éolienne flottante par rapport à la direction du vent ;
- définir une consigne de modification de l'inclinaison de l'éolienne flottante à partir de la direction du vent et de l'orientation de l'éolienne flottante ;
- agir sur l'inclinaison de l'éolienne flottante par ladite consigne de modification de l'inclinaison de l'éolienne flottante.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue latérale schématique d'un ensemble de production d'énergie en milieu marin, selon l'invention ;
- la figure 2 est une vue de dessus schématique d'une structure d'une éolienne flottante de l'ensemble de production d'énergie en milieu marin, selon l'invention, selon un premier mode de réalisation ;
- la figure 3 est une vue de dessus schématique d'une structure d'une éolienne flottante de l'ensemble de production d'énergie en milieu marin, selon l'invention, selon un deuxième mode de réalisation ;
- la figure 4 est une vue latérale schématique d'un ensemble de production d'énergie en milieu marin, selon l'invention, selon une variante de réalisation ;
- la figure 5 est un diagramme montrant l'évolution de l'angle de lacet selon différentes hypothèses d'utilisation de l'éolienne flottante de l'ensemble de production d'énergie en milieu marin, selon l'invention, lors d'une campagne de test ;
- Les figures 6a à 6d sont des représentations schématiques de l'éolienne flottante de l'ensemble de production d'énergie en milieu marin, selon l'invention, lors de la campagne de test, en vue de dessus pour les figures 6a et 6c, et en vue de face pour les figures 6b et 6d.

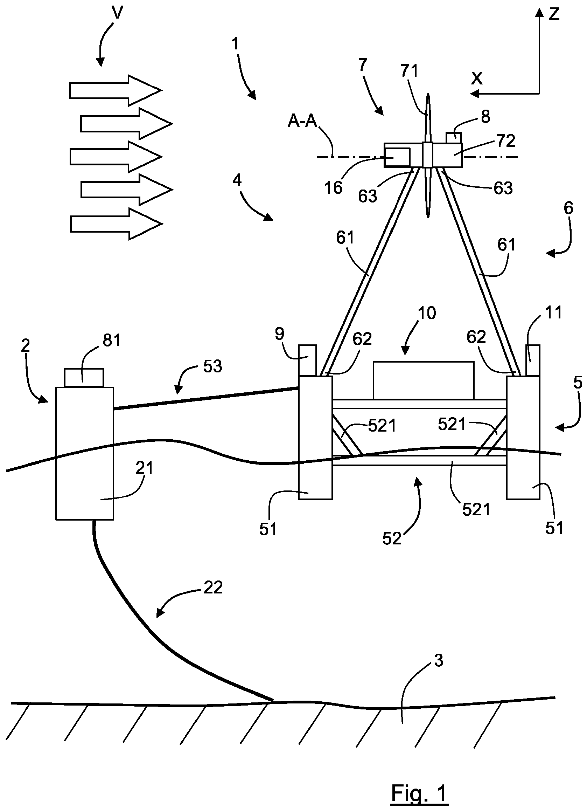

Sur la figure 1 est représenté un ensemble de production d'énergie 1 en milieu marin, selon l'invention.

L'ensemble de production d'énergie 1 comprend :
- des moyens d'ancrage 2 destinés à être solidarisés à un fond marin 3 ;
- une éolienne flottante 4 du type auto-orientable.

Les moyens d'ancrage 2 comprennent une bouée 21 et un dispositif d'ancrage 22 de la bouée 21 au fond marin 3.

L'éolienne flottante 4 comprend :
- une structure flottante 5 ;
- une structure aérienne 6 montée sur la structure flottante 5 ;
- une turbine7 portée par la structure aérienne 6.

La structure flottante 5 comprend au moins trois flotteurs 51, et en l'espèce quatre flotteurs 51.

Les flotteurs 51 sont reliés les uns aux autres par un treillis 52 formé de poutres 521, par exemples de poutres 521 métalliques.

La structure aérienne 6 comprend quatre jambes 61. Chaque jambe 61 présente une première extrémité 62 solidaire de l'un des flotteurs 51 et une deuxième extrémité 63 solidaire de la turbine7.

La turbine7 comprend une hélice 71 et une nacelle 72 sur laquelle l'hélice 71 est montée à rotation autour d'un axe A-A de rotation qui est fixe par rapport à la structure flottante 5 de l'éolienne flottante 4.

De manière générale, l'hélice 71 est composée d'un moyeu central sur lequel sont montées à rotation des pales. Les pales sont indépendantes les unes des autres pour permettre leur orientation en temps réel si nécessaire afin notamment de faire varier la résistance de l'hélice 71 au vent et donc le couple de la turbine7. A des fins de clarté on parle ci-après d'une hélice plutôt que d'un ensemble moyeu central et pales.

Tel qu'illustré sur la figure 1, la turbine7 est solidarisée à la structure aérienne 6 par coopération de la nacelle 72 avec la deuxième extrémité 63 des jambes.

Enfin, l'éolienne flottante 4 est reliée aux moyens d'ancrage 2 par des moyens de jonction 53, et plus particulièrement par au moins une amarre.

Les amarres permettent que, lors de son fonctionnement, l'éolienne flottante 4 puisse tourner autour de la bouée 22 des moyens d'ancrage 2 pour se positionner dans une direction du vent V (illustrée sur la figure 1 par des flèches). Dans le cas d'une unique amarre le centre de giration en lacet de l'éolienne flottante 4 est la jonction entre l'amarre et l'éolienne flottante 4.

En d'autres termes, la bouée 2 forme un axe de rotation autour duquel l'éolienne flottante 4 tourne pour assurer la production d'énergie.

On définit par rapport à l'éolienne flottante 4 un repère orthonormé tel comprenant :
- un axe X parallèle à l'axe A de rotation ;
- un axe Y perpendiculaire à l'axe Y et s'étendant selon une direction bâbord-tribord de l'éolienne flottante 4 ;
- un axe Z formant avec les axes X et Y un trièdre direct ou repère orthonormé.

Relativement à ce repère orthonormé, on définit trois angles rotations, à savoir un angle de roulis autour de l'axe X, un angle de tangage autour de l'axe Y, et un angle de lacet autour de l'axe Z.

Lors de la production d'énergie, l'éolienne flottante 4 est soumise à des forces extérieure qui tendent à la déstabiliser et à l'incliner.

Parmi ces forces extérieures, le courant et la houle entraînent une désorientation de l'éolienne flottante 4qui nuit à la productivité d'énergie électrique.

En outre, lorsque le vent exerce une poussée sur la turbine, l'éolienne a tendance à tanguer, c'est-à-dire à pivoter autour de l'axe Y.

Lorsque la houle est alignée avec le vent V, elle influence le tangage de l'éolienne de manière alternative et cyclique. On comprend par là qu'avec les creux et les crêtes de la houle, l'éolienne flottante se déplace puis revient en position de manière cyclique.

Lorsque la houle est perpendiculaire au vent, les efforts de premier ordre (les plus importants), c'est-à-dire la composante principale des efforts d'une manière générale, génèrent un roulis alternatif et cyclique.

Les efforts de la houle selon l'axe Y étant nuls en moyenne au premier ordre (annulation du déplacement (sur une crête) par le retour en position (dans un creux)), ils ne poussent pas l'éolienne flottante 4 suivant l'axe Y, ni ne modifie l'angle de lacet de l'éolienne flottante 4 par rapport à la direction du vent.

Les efforts du second ordre (vus en détail) génèrent éventuellement un effort de dérive de l'éolienne flottante 4, prenant la forme d'un angle de lacet.

En revanche, un courant selon l'axe Y peut être nuisible et ce d'autant plus que ce courant est élevé. Cela s'explique notamment par la trainée que le courant génère sur la structure flottante 5 de l'éolienne flottante 4.

En effet, l'éolienne flottante 4 se trouve alors désaxée, ce qui nuit à son rendement de production d'énergie électrique.

Pour réduire l'influence de la houle et du courant sur la productivité de l'éolienne flottante 4, l'invention vise à modifier la position du centre de poussée vélique P. Le centre de poussée vélique P de l'éolienne flottante 4 est défini comme le barycentre de la somme de tous les efforts liés au vent V appliqués sur la structure aérienne 6 (principalement sur l'hélice 71).

En modifiant la position du centre de poussée vélique P, l'éolienne flottante 4 se déplace suivant l'axe Y, et un angle de lacet α1 est généré.

L'une des raisons de ce mécanisme est la suivante : le vecteur vent V passant par un centre de giration en lacet de l'éolienne flottante 4 (par exemple les moyens d'ancrage) doit être colinéaire avec la force de poussée vélique P.

Cet angle de lacet α1 permet de corriger un désalignement avec le vent V, ou de créer un désalignement avec le vent V dans le cas où l'on souhaite orienter le sillage de l'éolienne flottante 4 dans une direction spécifique (par exemple pour éviter qu'il ne se dirige vers une autre éolienne flottante 4 positionnée en aval, ce qui perturberait son rendement.

En d'autres termes on crée volontairement un angle de lacet α1 acceptable pour éviter de perturber le fonctionnement d'une éolienne flottante 4 adjacente située en aval selon le sens d'écoulement du vent V.

Par acceptable on entend que l'angle de lacet α1 créé ne nuit pas au rendement de production de l'éolienne flottante 4 volontairement désaxée.

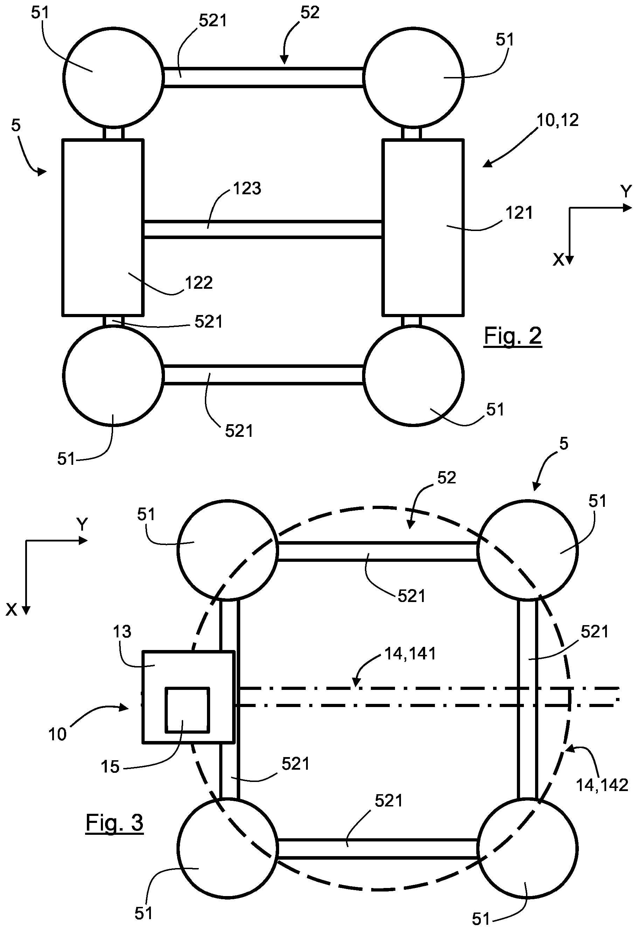

Pour permettre la correction ou la création de l'angle de lacet α1, et donc un bon rendement de production de l'éolienne flottante 4, l'ensemble de production 1 comprend :
- des moyens de détermination 8 de la direction du vent V ;
- des moyens de détection 81 d'une orientation de l'éolienne par rapport à la direction du vent ;
- des moyens de détection 9 d'une inclinaison de l'éolienne flottante 4 ;
- des moyens de pilotage 10 de l'inclinaison de l'éolienne flottante, illustrés schématiquement sur les figures 2 et 3 ;
- une unité de calcul 11, communiquant avec les moyens de détermination 8, les moyens de détection 9 et les moyens de pilotage 10.

Les moyens de détermination 8 de la direction du vent V prennent, par exemple, la forme d'une girouette, et les moyens de détermination de l'orientation de l'éolienne flottante 4 par rapport à la direction du vent V prennent par exemple la forme d'une caméra orientée dans la direction du vent V et destinés à capter la position d'un repère.

A titre d'exemple, la caméra est solidaire des moyens d'amarrage et le repère est solidaire de l'éolienne flottante 4.

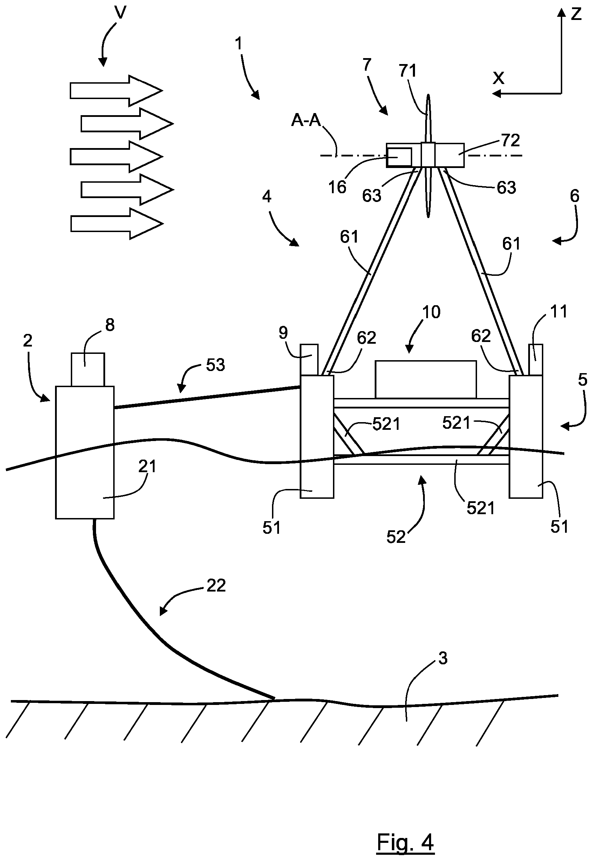

Les moyens de détermination 8 de la direction du vent V peuvent être montés sur l'éolienne flottante 4, comme illustré sur la figure 1, ou sur les moyens d'amarrage 2 et plus particulièrement sur la bouée 21, comme cela est illustré sur la figure 4.

Les moyens de détection 9 de l'inclinaison de l'éolienne flottante 4 prennent, par exemple, la forme d'un compas ou d'un accéléromètre et sont positionnés sur l'éolienne flottante 4. De préférence, les moyens de détection 9 de l'inclinaison de l'éolienne flottante prennent la forme d'une centrale inertielle.

L'unité de calcul 11 est destinée à acquérir des informations provenant des moyens de détermination 8 de la direction du vent et des moyens de détection 9 de l'inclinaison de l'éolienne flottante 4, pour transmettre une consigne aux moyens de pilotage 10 de l'inclinaison de l'éolienne flottante 4.

Selon un premier mode de réalisation illustré sur la figure 2, les moyens de pilotage 10 de l'inclinaison de l'éolienne flottante 4 comprennent un système de ballast 12 ayant :
- un premier réservoir 121 et un deuxième réservoir 122 ;
- des moyens de pompage 123.

Plus précisément, le premier réservoir 121 et le deuxième réservoir 122 sont solidaires chacun de la structure 5 de l'éolienne flottante 4 et disposés chacun de part et d'autre de l'axe de rotation A-A de la turbine 7.

Lorsque l'un du premier réservoir 121 et du deuxième réservoir 122 est rempli d'une plus grande quantité que l'autre, il est alors apte à agir sur l'inclinaison de l'éolienne flottante 4 et notamment sur l'angle de roulis, c'est-à-dire en faisant pivoter l'éolienne flottante 4 autour de l'axe Y.

En revanche, lorsqu'aucune force n'agit pour modifier l'inclinaison de l'éolienne flottante 4, le premier réservoir 121 et le deuxième réservoir 122 peuvent soit être chacun rempli soit, au contraire, être chacun vidé. Chaque réservoir présente alors une masse identique à l'autre de sorte que l'éolienne flottante 4 soit automatiquement stabilisée.

Les moyens de pompage 123 sont configurés pour permettre un transvasement d'un poids sous forme liquide ou semi liquide du premier réservoir 121 vers le deuxième réservoir 122 ou inversement.

Préférentiellement, le poids est de l'eau directement pompée dans la mer par les moyens de pompage 123. Les moyens de pompage 123 sont en outre configurés pour permettre de rejeter l'eau contenue dans chacun du premier réservoir 121 et du deuxième réservoir 122 pour permettre de les vider entièrement.

Par ailleurs, les moyens de pompage sont pilotés par l'unité de calcul 11 comme décrit ci-après.

Selon un deuxième mode de réalisation illustré sur la figure 3, les moyens de pilotage 10 de l'inclinaison de l'éolienne flottante 4 comprennent :
- une masse 13 ;
- des moyens de guidage 14 en déplacement de la masse 13 ;
- des moyens moteurs 15.

La masse 13 est montée mobile sur la structure 5 de l'éolienne flottante 4.

Plus particulièrement, la masse 13 est montée mobile sur les moyens de guidage 14 en déplacement de la masse 13, eux-mêmes solidaires de la structure 5 de l'éolienne flottante.

Les moyens de guidage 14 définissent un chemin de guidage s'étendant de part et d'autre de l'axe de rotation A-A de la turbine 7.

Selon une première forme de réalisation, les moyens de guidage 14 prennent la forme d'un rail rectiligne 141 s'étendant sensiblement perpendiculairement à l'axe de rotation A-a de la turbine 7. La masse 13 est donc apte à se déplacer sur ce rail rectiligne 141 pour aller de gauche (bâbord) à droite (tribord) ou inversement.

Selon une deuxième forme de réalisation, les moyens de guidage 14 prennent la forme d'un rail circulaire 142 dont le point central est situé sur un axe vertical passant par un centre de gravité de la structure 5 de l'éolienne flottante 4, de sorte qu'en l'absence de la masse 13, le rail circulaire 142 n'influe pas sur l'inclinaison de l'éolienne flottante 4 à lui seul.

La masse 13 est donc apte à se déplacer sur ce rail circulaire 142 pour aller de gauche (bâbord) à droite (tribord) ou inversement.

Pour permettre le déplacement de la masse 13 sur les moyens de guidage 14, les moyens moteurs 15, par exemple un moteur couplé à une ou plusieurs roues, sont montés solidaires de la masse 13.

Chaque roue des moyens moteurs 15 est alors destinée à coopérer avec les moyens de guidage 14 par friction ou par engrenage par exemple. Dans le cas d'une coopération par engrenage, chaque roue des moyens moteurs 15 est une roue dentée, et les moyens de guidage 14 comprennent soit une ligne dentée (pour le rail rectiligne 141), soit une couronne dentée (pour le rail circulaire 142).

Lorsque les moyens moteurs 15 sont actionnés, ils assurent le déplacement de la masse 13 le long des moyens de guidage 14.

Les moyens moteurs 15 sont pilotés par l'unité de calcul 11 pour être actionnés.

Selon un troisième mode de réalisation illustré sur les figures 1 et 4, les moyens de pilotage 10 de l'inclinaison comprennent des moyens d'ajustement 16 du couple de la turbine 7.

Plus précisément, les moyens d'ajustement 16 du couple de la turbine 7 sont positionnés dans la nacelle 72 de la turbine 7 et agissent, par exemple par l'intermédiaire d'une boîte de vitesses, sur la vitesse de rotation de l'hélice 71, de sorte à faire varier le couple de la turbine 7 en fonction d'une consigne provenant de l'unité de calcul 11.

En fonctionnement, le calculateur 11 reçoit des informations provenant des moyens de détermination 8 de la direction du vent et des moyens de détection 9 de l'inclinaison de l'éolienne flottante 4, pour les intégrer et déterminer une consigne de pilotage de l'inclinaison de l'éolienne flottante 4.

L'unité de calcul 11 transmet alors la consigne de contrôle aux moyens de pilotage 10 par des moyens ad hoc, les moyens de contrôle agissant alors directement sur l'inclinaison de l'éolienne flottante par :
- remplissage ou vidange de l'un ou de chacun du premier réservoir 121 et du deuxième réservoir (figure 2) ;
- déplacement de la masse 13 sur les moyens de guidage 14 (figure 3), et/ou
- ajustement du couple de la turbine 7 (figure 4).

Bien que cela ne soit pas illustré sur les figures, l'éolienne flottante 4 pourrait comprendre plusieurs moyens de pilotage 10 différents. En effet, il est possible de combiner au moins deux, voire les trois, modes de réalisation précités.

Par exemple, l'éolienne flottante 4 pourrait comprendre des premiers moyens de pilotage 10 sous forme de ballasts (figure 2) et/ou des deuxièmes moyens de pilotage 10 sous la forme du déplacement d'une masse (13) sur la structure flottante 5 (figure 3), et/ou des troisièmes moyens de pilotage 10 sous la forme des moyens d'ajustement 16 du couple moteur (figure 4).

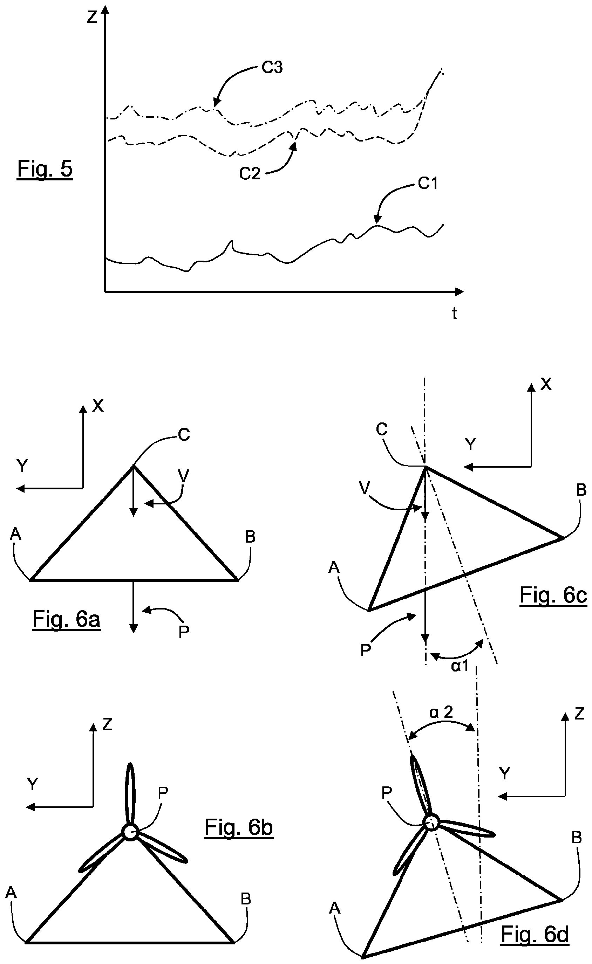

En référence à la figure 5, des tests expérimentaux ont été conduits les conditions d'exploitation de l'éolienne représentent un cas rare et gênant pour le fonctionnement de l'éolienne flottante, par exemple une houle de tempête.

Ces tests visent notamment à étudier le comportement de l'éolienne flottante 4 lorsque l'angle de roulis (rotation de l'éolienne flottante 4 autour de l'axe X sur les figures 1 à 4) est modifié.

Le comportement de l'éolienne flottante 4 est schématiquement illustré sur les figures 6a à 6d.

Sur les figures 6a et 6c, l'éolienne flottante 4 est schématiquement représentée par une droite s'étendant entre un point A et un point B, et sur les figures 6b et 6d, l'éolienne flottante 4 est vue de face. Le point C sur les figures 6a et 6c représente le centre de giration de l'éolienne flottante 4.

Sur la figure 6a, l'éolienne flottante 4 est schématisée dans une configuration optimale de fonctionnement, c'est-à-dire qu'aucune houle ni aucun courant ne s'applique sur l'éolienne flottante 4. Ainsi, le vecteur de la direction du vent V et la poussée vélique P sont alignés et aucun angle de lacet n'est généré.

Pour chaque test, représenté par l'une des courbes C1 à C3 sur le graphique de la figure 5, les conditions d'évolution de l'éolienne flottante 4 sont identiques, à savoir qu'une houle très importante (cas non représentatif des conditions générales normales de production) est produite à 90° par rapport à la direction du vent V.

La courbe C1 montre que dans ces conditions et sans pilotage de l'angle de roulis α2, l'éolienne flottante 4 présente un angle de lacet de 30° environ. L'éolienne flottante 4 est alors sensiblement parallèle à la surface de l'eau (ce qui signifie sur la figure 6b que le segment AB est horizontal).

Dans ces conditions d'évolution, la direction du vent V et la poussée vélique P ne sont plus alignés.

En modifiant la position du centre de poussée vélique P, grâce aux moyens de pilotage 10, l'éolienne flottante 4 se déplace suivant l'axe Y, et l'angle de lacet α1 est généré (figure 6c).

L'une des raisons de ce mécanisme est la suivante : le vecteur de la direction du vent V passant par un centre de giration en lacet de l'éolienne flottante 4 (par exemple les moyens d'ancrage) doit être colinéaire avec la force de poussée vélique P.

Cet angle de lacet α1, créé volontairement, permet donc de corriger le désalignement avec le vent V, ce qui augmente le rendement de production de l'éolienne flottante 4.

La courbe C2 illustre l'éolienne flottante 4 dans ces mêmes conditions, à la différence qu'un poids est ajouté sur le point A de la structure flottante 4 par les moyens de pilotage 10 (l'ajout de poids est schématisé sur la figure 6d). Dès lors, on constate que l'angle de lacet α1 est compris entre 5° et 10°.

Enfin, la courbe C3 illustre l'éolienne flottante 4 toujours dans ces mêmes conditions, à la différence qu'un poids deux fois plus important que pour la courbe C2 est ajouté sur le point 1 de la structure flottante 4. Dès lors, on constate que l'angle de lacet est compris entre 0° et 5°.

Ces tests permettent donc de valider le fait que le contrôle de l'angle de lacet α1 peut être effectué par l'un des moyens de pilotage 10 de l'inclinaison de l'éolienne flottante 4 tels que décrits précédemment, ces moyens de pilotage 10 influant alors sur l'angle de roulis α2 de l'éolienne flottante 4.

## Revendications

1. Ensemble de production d'énergie (1) en milieu marin comprenant :
- des moyens d'ancrage (2) destinés à être solidarisé à un fond marin (3) ;
- une éolienne flottante (4) comprenant une turbine (7) présentant un axe de rotation (A-A) fixe d'une hélice (71) par rapport à une structure flottante (5) de l'éolienne flottante (4), l'éolienne flottante (4) étant reliée aux moyens d'ancrage (2) et étant destinée à pivoter autour de ceux-ci de sorte que l'axe de rotation (A-A) de la turbine (7) soit sensiblement parallèle à une direction du vent (V),
- des moyens de détermination (8) de la direction du vent (V) ;
**caractérisé en ce qu'**il comprend :
- des moyens de détection (81) d'une orientation de l'éolienne flottante (4) par rapport à la direction du vent (V) ;
- des moyens de détection (9) d'une inclinaison de l'éolienne flottante (4) autour d'un axe parallèle à l'axe de rotation (A-A) de l'hélice (71) de la turbine (7) ;
- des moyens de pilotage (10) de l'inclinaison de l'éolienne flottante (4) ;
- une unité de calcul (11), destinée à recevoir des informations provenant des moyens de détermination (8) de la direction du vent (V), des moyens de détection (9) de l'inclinaison de l'éolienne flottante (4) et des moyens de détection (81) de l'orientation de l'éolienne flottante (4) par rapport à la direction du vent (V), pour transmettre une consigne aux moyens de pilotage (10) de l'inclinaison de l'éolienne flottante (4) et modifier l'orientation de l'éolienne flottante (4) par rapport à la direction du vent (V).

2. Ensemble selon la revendication 1, **caractérisé en ce que** les moyens de pilotage (10) de l'inclinaison comprennent un système de ballast ayant :
- un premier réservoir (121) et un deuxième réservoir (122) solidaires chacun d'une structure flottante (5) de l'éolienne flottante (4) et disposés chacun de part et d'autre de l'axe de rotation (A-A) de la turbine (7), et étant aptes à agir sur l'inclinaison de l'éolienne flottante (4) ;
- des moyens de pompage (123) configurés pour permettre un transvasement d'un poids sous forme liquide ou semi liquide du premier réservoir (121) vers le deuxième réservoir (122) ou inversement.

3. Ensemble selon la revendication 1, **caractérisé en ce que** les moyens de pilotage (10) de l'inclinaison comprennent :
- une masse (13) montée mobile sur une structure flottante (5) de l'éolienne flottante (4) ;
- des moyens de guidage (14) en déplacement de la masse (13), définissant un chemin de guidage s'étendant de part et d'autre de l'axe de rotation (A-A) de la turbine (7) ;
- des moyens moteurs (15) pour permettre le déplacement de la masse (13) sur les moyens de guidage (14).

4. Ensemble selon la revendication 1, **caractérisé en ce que** les moyens de pilotage (10) de l'inclinaison comprennent des moyens d'ajustement (16) du couple de la turbine (7) pour faire varier le couple de la turbine (7) en fonction d'une consigne provenant de l'unité de calcul (11).

5. Ensemble selon l'une quelconque des revendications précédentes, **caractérisé en ce que** les moyens de détermination (8) de la direction du vent comprennent une girouette.

6. Ensemble selon la revendication précédente, **caractérisé en ce que** la girouette est solidaire de l'éolienne flottante (4).

7. Ensemble selon la revendication 6, **caractérisé en ce que** la girouette est solidaire des moyens d'ancrage (2).

8. Ensemble selon l'une quelconque des revendications précédentes, **caractérisé en ce que** les moyens de détection (9) de l'inclinaison de l'éolienne flottante (4) comprennent une centrale inertielle solidaire de l'éolienne flottante (4).

9. Procédé de modification de l'orientation d'une éolienne flottante (4) mise en oeuvre par un ensemble de production d'énergie (1) en milieu marin selon l'une quelconque des revendications précédentes, **caractérisé en ce qu'**il comprend les étapes consistant à :
- déterminer la direction du vent (V) ;
- détecter l'orientation de l'éolienne flottante (4) par rapport à la direction du vent (V) ;
- définir une consigne de modification de l'inclinaison de l'éolienne flottante (4) à partir de la direction du vent (V) et de l'orientation de l'éolienne flottante (4) ;
- agir sur l'inclinaison de l'éolienne flottante (4) par ladite consigne de modification de l'inclinaison de l'éolienne flottante (4).

## Patentansprüche

1. Anordnung zur Erzeugung von Energie (1) in Meeresumgebung, umfassend:
- ein Verankerungsmittel (2), das dazu bestimmt ist, fest mit einem Meeresboden (3) verbunden zu werden;
- eine schwimmende Windkraftanlage (4), die eine Turbine (7) mit einer festen Drehachse (A-A) eines Laufrads (71) in Bezug auf eine schwimmende Struktur (5) der schwimmenden Windkraftanlage (4) umfasst, wobei die schwimmende Windkraftanlage (4) mit dem Verankerungsmittel (2) verbunden und dazu bestimmt ist, sich derart um diese zu schwenken, dass die Drehachse (A-A) der Turbine (7) im Wesentlichen parallel zu einer Windrichtung (V) verläuft,
- ein Mittel zum Bestimmen (8) der Windrichtung (V);
**dadurch gekennzeichnet, dass** es Folgendes umfasst:
- ein Mittel zum Erfassen (81) einer Ausrichtung der schwimmenden Windkraftanlage (4) in Bezug auf die Windrichtung (V);
- ein Mittel zum Erfassen (9) einer Neigung der schwimmenden Windkraftanlage (4) um eine Achse parallel zur Drehachse (A-A) des Laufrads (71) der Turbine (7);
- ein Mittel zum Steuern (10) der Neigung der schwimmenden Windkraftanlage (4);
- eine Recheneinheit (11), die dazu bestimmt ist, Informationen von dem Mittel zum Bestimmen (8) der Windrichtung (V), dem Mittel zum Erfassen (9) der Neigung der schwimmenden Windkraftanlage (4) und dem Mittel zum Erfassen (81) der Ausrichtung der schwimmenden Windkraftanlage (4) in Bezug auf die Windrichtung (V) zu empfangen, um eine Anweisung an das Mittel zum Steuern (10) der Neigung der schwimmenden Windkraftanlage (4) zu übertragen und die Ausrichtung der schwimmenden Windkraftanlage (4) in Bezug auf die Windrichtung (V) zu ändern.

2. Anordnung nach Anspruch 1, **dadurch gekennzeichnet, dass** das Mittel zum Steuern (10) der Neigung ein Ballastsystem umfasst, das Folgendes aufweist:
- einen ersten Tank (121) und einen zweiten Tank (122), die jeweils fest mit einer schwimmenden Struktur (5) der schwimmenden Windkraftanlage (4) verbunden und jeweils auf beiden Seiten der Drehachse (A-A) der Turbine (7) angeordnet und dazu ausgelegt sind, auf die Neigung der schwimmenden Windkraftanlage (4) einzuwirken;
- ein Pumpmittel (123), das dazu konfiguriert ist, ein Umfüllen eines Gewichts in flüssiger Form oder in halbflüssiger Form vom ersten Tank (121) zum zweiten Tank (122) oder umgekehrt zu ermöglichen.

3. Anordnung nach Anspruch 1, **dadurch gekennzeichnet, dass** das Mittel zum Steuern (10) der Neigung Folgendes umfasst:
- eine Masse (13), die beweglich an einer schwimmenden Struktur (5) der schwimmenden Windkraftanlage (4) montiert ist;
- ein Mittel zum Führen (14) der Verschiebung der Masse (13), das einen Führungspfad definiert, der sich auf beiden Seiten der Drehachse (A-A) der Turbine (7) erstreckt;
- ein Motormittel (15) zum Ermöglichen der Verschiebung der Masse (13) an dem Führungsmittel (14).

4. Anordnung nach Anspruch 1, **dadurch gekennzeichnet, dass** das Mittel zum Steuern (10) der Neigung ein Mittel zum Einstellen (16) des Drehmoments der Turbine (7) umfasst, um das Drehmoment der Turbine (7) entsprechend einer Anweisung von der Recheneinheit (11) zu ändern.

5. Anordnung nach einem der vorhergehenden Ansprüche, **dadurch gekennzeichnet, dass** das Mittel zum Bestimmen (8) der Windrichtung eine Windfahne umfasst.

6. Anordnung nach dem vorhergehenden Anspruch, **dadurch gekennzeichnet, dass** die Windfahne fest mit der schwimmenden Windkraftanlage (4) verbunden ist.

7. Anordnung nach Anspruch 6, **dadurch gekennzeichnet, dass** die Windfahne fest mit dem Verankerungsmittel (2) verbunden ist.

8. Anordnung nach einem der vorhergehenden Ansprüche, **dadurch gekennzeichnet, dass** das Mittel zum Erfassen (9) der Neigung der schwimmenden Windkraftanlage (4) eine Trägheitsmesseinheit umfasst, die fest mit der schwimmenden Windkraftanlage (4) verbunden ist.

9. Verfahren zum Ändern der Ausrichtung einer schwimmenden Windkraftanlage (4), durchgeführt durch eine Anordnung zur Erzeugung von Energie (1) in Meeresumgebung nach einem der vorhergehenden Ansprüche, **dadurch gekennzeichnet, dass** es die folgenden Schritte umfasst:
- Bestimmen der Windrichtung (V);
- Erfassen der Ausrichtung der schwimmenden Windkraftanlage (4) in Bezug auf die Windrichtung (V);
- Definieren einer Anweisung zum Ändern der Neigung der schwimmenden Windkraftanlage (4) anhand der Windrichtung (V) und der Ausrichtung der schwimmenden Windkraftanlage (4) ;
- Einwirken auf die Neigung der schwimmenden Windkraftanlage (4) durch die Anweisung zum Ändern der Neigung der schwimmenden Windkraftanlage (4).

## Claims

1. Assembly (1) for producing energy in a marine environment, comprising:
- anchoring means (2) intended to be secured to a seabed (3) ;
- a floating wind turbine (4) comprising a turbine (7) having a fixed rotation axis (A-A) of a rotor (71) with respect to a floating structure (5) of the floating wind turbine (4), the floating wind turbine (4) being linked to the anchoring means (2) and being intended to pivot around them in such a way that the rotation axis (A-A) of the turbine (7) is substantially parallel to a wind direction (V),
- means (8) for detecting the wind direction (V);
**characterized in that** it comprises:
- means (81) for detecting an orientation of the floating wind turbine (4) with respect to the wind direction (V);
- means (9) for detecting an inclination of the floating wind turbine (4) about an axis parallel to the rotation axis (A-A) of the rotor (71) of the turbine (7);
- means (10) for controlling the inclination of the floating wind turbine (4);
- a computing unit (11), intended to receive information from the means (8) for determining the wind direction (V), means (9) for detecting the inclination of the floating wind turbine (4), and means (81) for detecting the orientation of the floating wind turbine (4) with respect to the wind direction (V), so as to transmit an instruction to the means (10) for controlling the inclination of the floating wind turbine (4) and to modify the orientation of the floating wind turbine (4) with respect to the wind direction (V).

2. Assembly according to claim 1, **characterized in that** the means (10) for controlling the inclination comprise a ballast system having:
- a first reservoir (121) and a second reservoir (122), which are each secured to a floating structure (5) of the floating wind turbine (4) and each disposed on either side of the rotation axis (A-A) of the turbine (7), and being able to act on the inclination of the floating wind turbine (4) ;
- pumping means (123) configured to allow a transfer of a liquid or semiliquid weight from the first reservoir (121) to the second reservoir (122) or vice versa.

3. Assembly according to claim 1, **characterized in that** the means (10) for controlling the inclination comprise:
- a mass (13) mounted movably on a floating structure (5) of the floating wind turbine (4);
- means (14) for guiding the displacement of the mass (13), defining a guide path extending on either side of the rotation axis (A-A) of the turbine (7);
- driving means (15) for allowing the movement of the mass (13) on the guide means (14).

4. Assembly according to claim 1, **characterized in that** the means (10) for controlling the inclination comprise means (16) for adjusting the torque of the turbine (7) to adjust the torque of the turbine (7) according to an instruction coming from the computing unit (11).

5. Assembly according to any one of the preceding claims, **characterized in that** the means (8) for determining the direction of the wind comprise a wind vane.

6. Assembly according to the preceding claim, **characterized in that** the wind vane is secured to the floating wind turbine (4).

7. Assembly according to claim 6, **characterized in that** the wind vane is secured to the anchoring means (2).

8. Assembly according to any one of the preceding claims, **characterized in that** the means (9) for detecting the inclination of the floating wind turbine (4) comprise an inertial unit secured to the floating wind turbine (4).

9. Method for modifying the orientation of a floating wind turbine (4) implemented by an assembly (1) for producing energy in a marine environment according to any one of the preceding claims, **characterized in that** it comprises the steps consisting in:
- determining the wind direction (V);
- detecting the orientation of the floating wind turbine (4) with respect to the wind direction (V);
- defining an instruction for modifying the inclination of the floating wind turbine (4) on the basis of the wind direction (V) and the orientation of the floating wind turbine (4);
- acting on the inclination of the floating wind turbine (4) by way of said instruction for modifying the inclination of the floating wind turbine (4).
